# EUROPEAN PATENT APPLICATION

(11) **EP 4 567 977 A1**
(43) Date of publication of application: **11.06.2025**
(21) Application number: 24180800.5
(22) Date of filing: 07.06.2024
(51) Int. Cl.: H01M 50/143, H01M 50/209, H01M 50/213, H01M 50/342, H01M 50/383

(54) **BATTERY MODULE**

(30) Priority: 05.12.2023 KR 20230174426
(71) Applicant: Samsung SDI Co., Ltd., Yongin-si, Gyeonggi-do 17084 (KR)
(72) Inventor: Cho, Man Sik, 16678 Suwon-si, Gyeonggi-do (KR); Hyun, Seung Joo, 16678 Suwon-si, Gyeonggi-do (KR)
(74) Representative: Gulde & Partner

(57) **Abstract**

The present invention relates to a battery module (1, 2), and the battery module (1, 2) provides a plurality of battery cells (100) of which first surfaces (A) are each provided with a first vent (110) and which are disposed in a first direction, a holder (200) which covers the first surfaces (A) of the plurality of battery cells (100) and includes a second vent (211), and an insulating sheet (300, 400) which is coupled to the holder (200), covers the second vent (211), is deformed by a pressure of gas discharged through each of the first vents (110), and opens the second vent (211).

## Description

### BACKGROUND

### 1. Field

The present invention relates to a battery module.

### 2. Description of Related Art

In general, with rapidly increasing demand for portable electronics, such as laptops, video cameras, and mobile phones, and commercialization of robots and electric vehicles, research is actively carried out to develop high-performance secondary batteries enabling repeated charging/discharging.

Secondary batteries are widely used in small devices, such as portable electronics, as well as medium and large devices, such as electric vehicles and energy storage systems (ESS), for power generation and energy storage. In particular, in medium or large devices, multiple battery cells may be electrically connected to each other to form a battery module in order to enhance output and/or capacity of the batteries.

The above information disclosed in this Background section is provided for enhancement of understanding of the background of the present disclosure, and, therefore, it may contain information that does not constitute related (or prior) art.

### SUMMARY OF THE INVENTION

The present invention is directed to providing a battery module which delays heat propagation to protect a battery cell.

These and other aspects and features of the present disclosure will be described in or will be apparent from the following description of some embodiments of the present disclosure.

According to one or more embodiments of the present invention, there is provided a battery module including a plurality of battery cells of which first surfaces are each provided with a first vent and which are disposed in a first direction, a holder which covers the first surfaces of the plurality of battery cells and includes a second vent, and an insulating sheet which is coupled to the holder, covers the second vent, is deformed by a pressure of gas discharged through each of the first vents, and opens the second vent.

The second vent may be provided as a plurality of second vents disposed to be spaced apart from each other in the first direction.

The second vent may be disposed at a location corresponding to the first vent.

The holder may include a plate portion in which the second vent is formed, and a coupling part which is provided along an edge of the second vent and to which the insulating sheet may be coupled.

The coupling part may include a protruding portion protruding from the plate portion, a seating part which is formed to be recessed in the protruding portion and in which the insulating sheet may be seated, and a latch part which is formed to pass through the protruding portion and in which the insulating sheet may be fixedly latched.

The latch part may be provided as a plurality of latch parts disposed to be spaced apart from each other along the protruding portion, and the seating part may be disposed between the plurality of latch parts.

The insulating sheet may include a cover part which covers the second vent, a first protrusion which protrudes from an edge of the cover part and may be seated in the seating part, a second protrusion which protrudes from the edge of the cover part and may pass through the latch part, and a deforming part formed between the cover part and the second protrusion and that may be deformed by the pressure of the gas discharged through the first vent.

The first protrusion may be provided as a plurality of first protrusions disposed to be spaced apart from each other along the edge of the cover part, and the second protrusion may be disposed between the plurality of first protrusions

The coupling part may include a protruding portion protruding from the plate portion, and a latch part which is formed to pass through the protruding portion and provided as a plurality of latch parts disposed to be spaced apart from each other along the protruding portion and in which the insulating sheet may be fixedly latched.

The insulating sheet may include a cover part which covers the second vent, a protrusion which protrudes from an edge of the cover part and may pass through the latch part, and a deforming part formed in the cover part and that may be deformed by the pressure of the gas discharged through the first vent.

The deforming part may include a first deforming part and a second deforming part which intersects the first deforming part.

The deforming part may be deformed to be bent.

The deforming part may be ruptured.

The deforming part may include a notch.

The deforming part may include a slit.

The deforming part may include a perforated line.

The insulating sheet may be separated from the holder by the pressure of the gas discharged through the first vent.

The battery module may further include a side plate which is disposed in a second direction intersecting the first direction and faces a second surface of each of the plurality of battery cells.

The battery module may further include an end plate which is disposed in the first direction and faces a third surface of the battery cell.

According to an aspect of the present invention, when gas is discharged due to an abnormal phenomenon occurring in some battery cells among a plurality of battery cells, an insulating sheet, which covers the battery cell in which the abnormal phenomenon occurs, is separated from a holder by a pressure of the gas to suppress spread of the abnormal phenomenon to the other surrounding battery cells among the plurality of battery cells. Accordingly, the spread of fire and explosion can be delayed to protect the battery cells.

However, the aspects and effects obtainable through the present disclosure are not limited to the above aspects and effects, and other technical aspects and effects that are not mentioned will be clearly understood by those skilled in the art from the following description of the present disclosure.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a schematic perspective view illustrating a battery module according to a first embodiment of the present invention;
FIG. 2 is a schematic exploded perspective view illustrating the battery module according to the first embodiment of the present invention;
FIG. 3 is a partially enlarged schematic perspective view illustrating the battery module according to the first embodiment of the present invention;
FIGS. 4 to 6 are schematic perspective views illustrating an insulating sheet in the battery module according to the first embodiment of the present invention;
FIG. 7 is a schematic perspective view illustrating a battery module according to a second embodiment of the present invention;
FIG. 8 is a partially enlarged schematic perspective view illustrating the battery module according to the second embodiment of the present invention; and
FIGS. 9 to 11 are schematic perspective views illustrating an insulating sheet in the battery module according to the second embodiment of the present invention.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

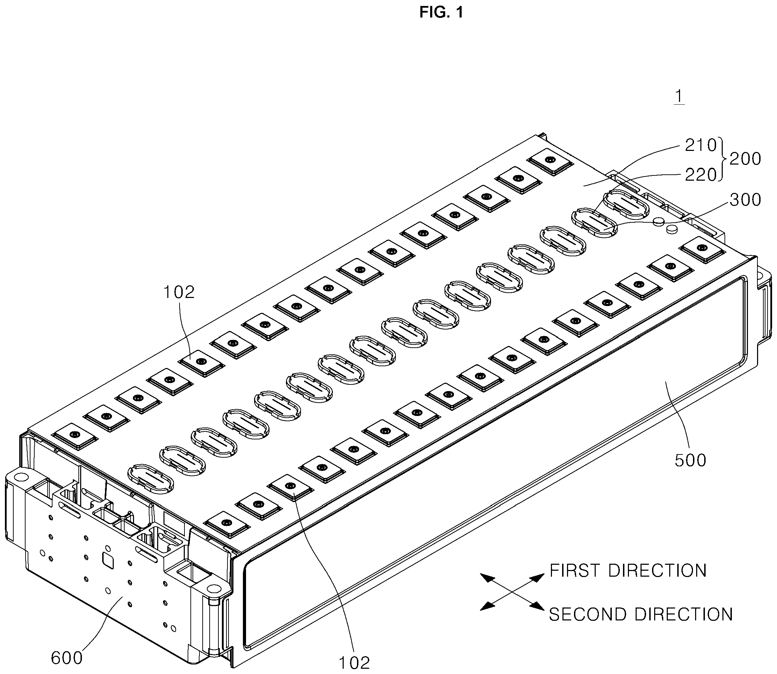

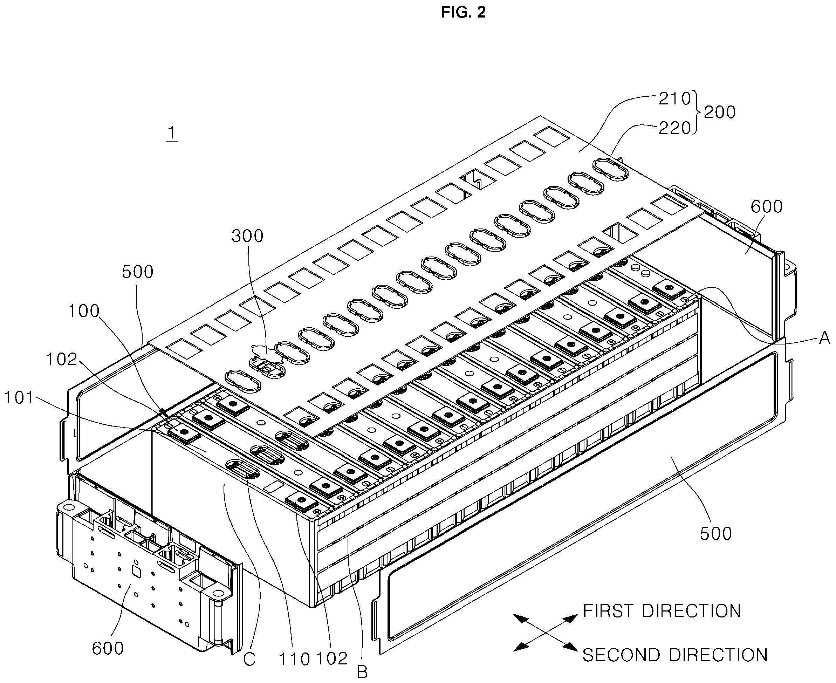

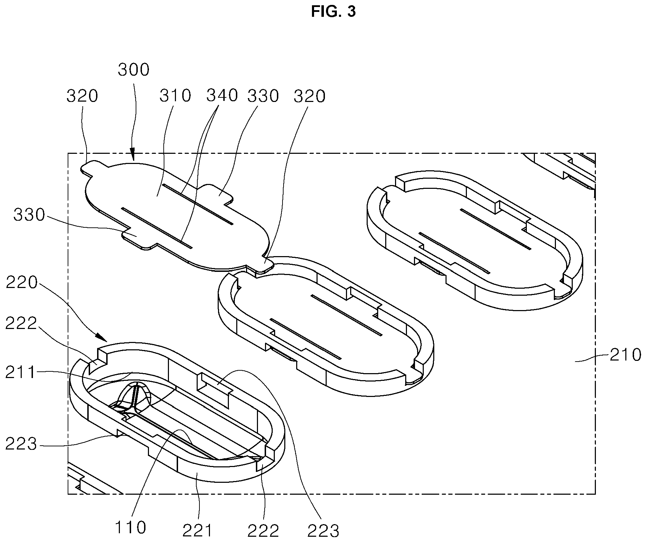

FIG. 1 is a schematic perspective view illustrating a battery module according to a first embodiment of the present invention, FIG. 2 is a schematic exploded perspective view illustrating the battery module according to the first embodiment of the present invention, and FIG. 3 is a partially enlarged schematic perspective view illustrating the battery module according to the first embodiment of the present invention.

Referring to FIGS. 1 to 3, a battery module 1 according to the first embodiment of the present invention includes a battery cell 100, a holder 200, and an insulating sheet 300.

The battery cell 100 may function as a unit structure which stores and supplies power in the battery module 1. The battery cell 100 may be illustrated as a prismatic secondary battery including an electrode assembly (not shown), in which a positive plate (not shown) and a negative plate (not shown) are disposed with a separator (not shown) interposed therebetween, and may charge a certain amount (e.g., a preset amount) of power and discharge the power.

The battery cell 100 may be provided as a plurality of battery cells 100. The battery cells 100 may include cell bodies 101, pairs of cell terminals 102, and first vents 110. The cell bodies 101 may be disposed in a first direction. The number of the cell bodies 101 is not limed to that illustrated in FIG. 2, and may be design-changed according to a size of each battery module 1 and the like.

One of the pair of cell terminals 102 may be a positive terminal, and the other may be a negative terminal. The pair of cell terminals 102 may protrude from a first surface A of the cell body 101. In the illustrated first embodiment of the present invention, the first surface A is illustrated and described as an upper surface of the cell body 101. However, the present invention is not limited thereto, and variously modified embodiments can be formed.

The pair of cell terminals 102 may be spaced apart from each other, and each of the pair of cell terminals 102 may be disposed at one of both side portions of the cell body 101 in a second direction intersecting (e.g., perpendicularly intersecting) the first direction. The pair of cell terminals 102 may pass through the holder 200 and be exposed.

The first vent 110 may be provided in the first surface A of the cell body 101. The first vent 110 may be disposed between the pair of cell terminals 102. Gas generated in the battery cell 100, that is, in the cell body 101 may be discharged through the first vent 110.

The battery cell 100 may further include a cap plate (not shown) which seals the first surface A to prevent the electrode assembly and matter such as an electrolyte accommodated in the cell body 101 from leaking.

The holder 200 may cover a plurality of first surfaces A of the battery cells. The holder 200 may include a plate portion 210 and a coupling part 220.

The plate portion 210 may be formed in a substantially plate shape. The plate portion 210 may be seated on the plurality of battery cells 100. The plate portion 210 may be coupled to a side plate 500 and an end plate 600, which will be described below, by any of various methods such as bolting, welding, bonding, fitting, and latching methods.

The plate portion 210 may include a second vent 211. The second vent 211 may be formed to pass through the plate portion 210 in a thickness direction of the plate portion 210. The second vent 211 may be provided as a plurality of second vents 211 in the plate portion 210. The gas discharged through the first vent 110 may be discharged to the outside through the second vent 211.

The plurality of second vents 211 may be disposed to be spaced apart from each other in the first direction. The second vents 211 may be disposed at locations corresponding to the first vents 110 and communicating with the first vents 110. A plurality of first vents 110 and the plurality of second vents 211 may be disposed to individually face each other.

The coupling part 220 may be integrally formed with the plate portion 210. The coupling part 220 may be provided along an edge of the second vent 211. The insulating sheet 300 may be coupled to the coupling part 220. The coupling part 220 may include a protruding portion 221, a seating part 222, and a latch part 223.

The protruding portion 221 may protrude from the plate portion 210. The protruding portion 221 may be formed to protrude from an outer upper surface of the plate portion 210. The protruding portion 221 may be formed along the edge of the second vent 211.

The seating part 222 may be formed to be recessed in the protruding portion 221. The seating part 222 may be formed in a shape concavely engraved or recessed from an upper surface of the protruding portion 221. The insulating sheet 300 may be seated in the seating part 222.

The latch part 223 may be formed to pass through the protruding portion 221. The latch part 223 may be formed to pass through the protruding portion 221 in a width direction of the protruding portion 221. The insulating sheet 300 may be fixedly latched in the latch part 223. The latch part 223 may be provided as a plurality of latch parts 223 disposed to be spaced apart from each other along the protruding portion 221.

The seating part 222 may be disposed between the plurality of latch parts 223. That is, the latch part 223 and the seating part 222 may be alternately disposed along the protruding portion 221.

The insulating sheet 300 is coupled to the holder 200 and covers the second vent 211. The insulating sheet 300 is may be deformed by a pressure of the gas discharged through the first vent 110 to open the second vent 211. The insulating sheet 300 may be formed in a substantially plate shape.

The insulating sheet 300 may include a cover part 310, a first protrusion 320, a second protrusion 330, and a deforming part 340. The cover part 310 may cover the second vent 211.

The first protrusion 320 may protrude from an edge of the cover part 310. The first protrusion 320 may be formed to protrude from the edge of the cover part 310. The first protrusion 320 may be integrally formed with the cover part 310.

The first protrusion 320 may be disposed at a location corresponding to the seating part 222. Accordingly, the first protrusion 320 may be disposed in the seating part 222.

The second protrusion 330 may protrude from the edge of the cover part 310. The second protrusion 330 may be formed to protrude from the edge of the cover part 310. The second protrusion 330 may be integrally formed with the cover part 310.

The second protrusion 330 may pass through the protruding portion 221. The second protrusion 330 may be fixedly latched in the latch part 223 after passing through the protruding portion 221.

The second protrusion 330 may be provided as a plurality of second protrusions 330 disposed to be spaced apart from each other along the edge of the cover part 310. The first protrusion 320 may be disposed between the plurality of second protrusions 330. That is, the first protrusion 320 and the second protrusion 330 may be alternately disposed along the edge of the cover part 310.

The deforming part 340 may be formed between the cover part 310 and the second protrusion 330. The deforming part 340 may be deformed by the pressure of the gas discharged through the first vent 110. The deforming part 340 may be deformed to be bent.

The battery module 1 according to the first embodiment of the present invention may further include the side plate 500. The side plate 500 may be disposed in the second direction intersecting the first direction and may face a second surface B of each of the plurality of battery cells. In this case, the second surface B refers to both side surfaces of the battery cell 100.

The side plate 500 may be disposed to cover the side surface of the battery cell 100 and may protect the battery cell 100 from external foreign matter, an impact, and the like.

The side plate 500 may be formed in a plate shape disposed to face the side surface of the battery cell 100. A longitudinal direction of the side plate 500 is an arrangement direction of the plurality of battery cells 100 and is parallel to the side surface of the battery cell 100.

The side plate 500 may be provided as a pair of side plates 500. Inner side surfaces of the pair of side plates 500 may be disposed to individually face both side surfaces of the battery cell 100.

The battery module 1 according to the first embodiment of the present invention may further include the end plate 600. The end plate 600 may be disposed in the first direction to face a third surface C of the battery cell 100. In this case, the third surface C is each of front and rear surfaces of the battery cell 100.

The end plate 600 may be disposed to intersect the side plate 500 to face each of the front and rear surfaces of the battery cell 100. More specifically, the end plate 600 may be provided as a pair of end plates 600, and inner surfaces of the pair of end plates 600 may be disposed to face a front surface of the battery cell 100 disposed at an end of the plurality of battery cells 100 and the rear surface of the battery cell 100 disposed another end of the plurality of battery cells 100.

The end plate 600 may be formed in a substantially plate shape. A longitudinal direction of the end plate 600 is a direction perpendicular to the arrangement direction of the plurality of battery cells 100 and is parallel to the front and rear surfaces of the battery cell 100.

Both end portions of the end plate 600 may be coupled to the side plate 500. More specifically, both end portions of an end plate 600 of the pair of end plates 600 may be coupled to one end portions of the pair of side plates 500, and both end portions of the other end plate 600 may be coupled to the other end portions of the pair of side plates 500.

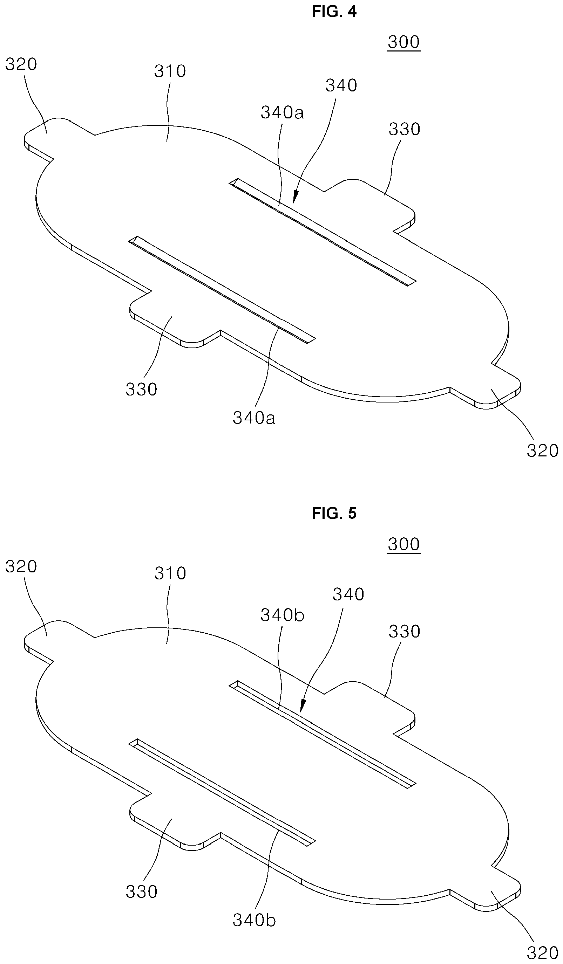

FIGS. 4 to 6 are schematic perspective views illustrating an insulating sheet in the battery module according to the first embodiment of the present invention;
Referring to FIG. 4, a deforming part 340 may include a notch 340a. The notch 340a may be formed to be recessed in an outer upper surface of an insulating sheet 300 and located between a cover part 310 and a second protrusion 330. The notch 340a may have a length (e.g., a preset length) and may be formed in a substantially linear shape.

As an example, the notch 340a may be deformed to be bent by a pressure of gas discharged through a first vent 110 and may allow the second protrusion 330 fixedly latched in a latch part 223 to be separated from the latch part 223. Accordingly, the insulating sheet 300 may be separated from a holder 200 by the gas discharged through the first vent 110.

As another example, the notch 340a may be ruptured. The notch 340a deformed to be bent by the gas discharged through the first vent 110 may be ruptured to break the insulating sheet 300.

Referring to FIG. 5, a deforming part 340 may include a slit 340b. The slit 340b may be formed to pass through an insulating sheet 300 in a thickness direction of the insulating sheet 300 and may be located between a cover part 310 and a second protrusion 330. The slit 340b may have a length (e.g., a preset length) and may be formed in a substantially linear shape.

As an example, the slit 340b may be deformed to be bent by a pressure of gas discharged through a first vent 110 and may allow the second protrusion 330 fixedly latched in a latch part 223 to be separated from the latch part 223. Accordingly, the insulating sheet 300 may be separated from a holder 200 by the pressure of the gas discharged through the first vent 110.

As another example, the slit 340b may be ruptured. The slit 340b deformed to be bent by the pressure of the gas discharged through the first vent 110 may be ruptured to break the insulating sheet 300

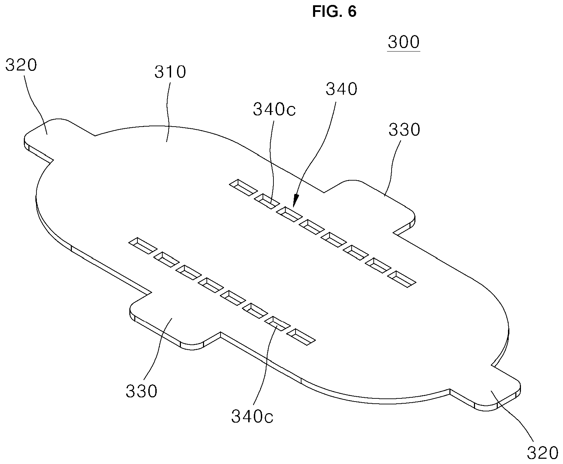

Referring to FIG. 6, a deforming part 340 may include a perforated line 340c. The perforated line 340c may be formed to pass through an insulating sheet 300 in a thickness direction of the insulating sheet 300 and located between a cover part 310 and a second protrusion 330. The perforated line 340c may have a length (e.g., a preset length) and may be formed in a substantially linear shape.

As an example, the perforated line 340c may be deformed to be bent by a pressure of gas discharged through a first vent 110 and allow the second protrusion 330 fixedly latched in a latch part 223 to be separated from the latch part 223. Accordingly, an insulating sheet 300 can be separated from a holder 200 by the pressure of the gas discharged through the first vent 110.

As another example, the perforated line 340c may be ruptured. The perforated line 340c deformed to be bent by the pressure of the gas discharged through the first vent 110 may be ruptured to break the insulating sheet 300.

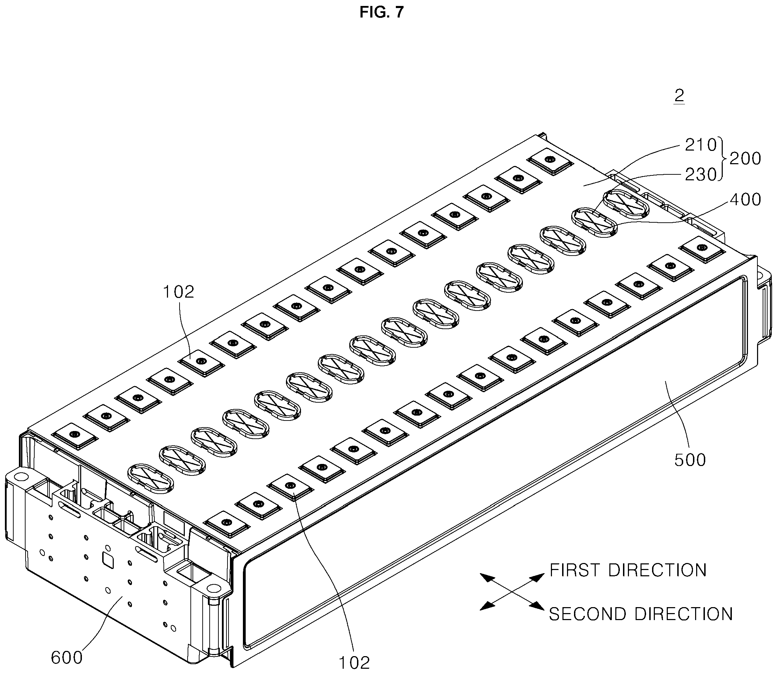

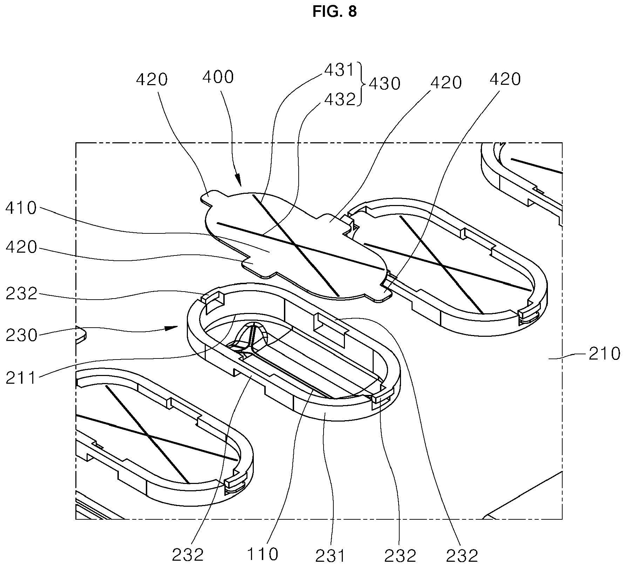

FIG. 7 is a schematic perspective view illustrating a battery module according to a second embodiment of the present invention, and FIG. 8 is a partially enlarged schematic perspective view illustrating the battery module according to the second embodiment of the present invention.

Referring to FIGS. 7 and 8, a battery module 2 according to the second embodiment of the present invention may include a battery cell 100, a holder 200, an insulating sheet 400, a side plate 500, and an end plate 600.

When the battery module 2 according to the second embodiment of the present invention is described, different examples from the coupling part 220 and the insulating sheet 300 in the battery module 1 according to the first embodiment of the present invention will be described.

The descriptions of the battery module 1 according to the first embodiment of the present invention may be applied to the other components of the battery module 2 according to the second embodiment of the present invention without change.

A coupling part 230 may include a protruding portion 231 and a latch part 232. The protruding portion 231 may protrude from a plate portion 210.

The protruding portion 231 may be formed to protrude from an outer upper surface of the plate portion 210. The protruding portion 231 may be formed along an edge of a second vent 211.

The latch part 232 may be formed to pass through the protruding portion 231. The latch part 232 may be formed to pass through the protruding portion 231 in a width direction of the protruding portion 231. The insulating sheet 400 may be fixedly latched in the latch part 232. The latch part 232 may be provided as a plurality of latch parts 232 disposed to be spaced apart from each other along the protruding portion 231.

The insulating sheet 400 is coupled to the holder 200 and covers the second vent 211. The insulating sheet 400 is deformed by a pressure of gas discharged through a first vent 110 and opens the second vent 211. The insulating sheet 400 may be formed in a substantially plate shape.

The insulating sheet 400 may include a cover part 410, a protrusion 420, and a deforming part 430. The cover part 410 may cover the second vent 211.

The protrusion 420 may protrude from an edge of the cover part 410. The protrusion 420 may be formed to protrude from the edge of the cover part 410. The protrusion 420 may be integrally formed with the cover part 410.

The protrusion 420 may be provided as a plurality of protrusions 420 disposed to be spaced apart from each other along the edge of the cover part 410. The protrusion 420 may be disposed at a location corresponding to the latch part 232. The protrusion 420 may pass through the protruding portion 231. The protrusion 420 may be fixedly latched in the latch part 232 after passing through the protruding portion 231.

The deforming part 430 may be formed in the cover part 410. The deforming part 430 may be deformed by the pressure of the gas discharged through the first vent 110. The deforming part 430 may be deformed to be bent.

The deforming part 430 may include a first deforming part 431 and a second deforming part 432. The first deforming part 431 and the second deforming part 432 may be disposed to intersect in a substantially "X" shape.

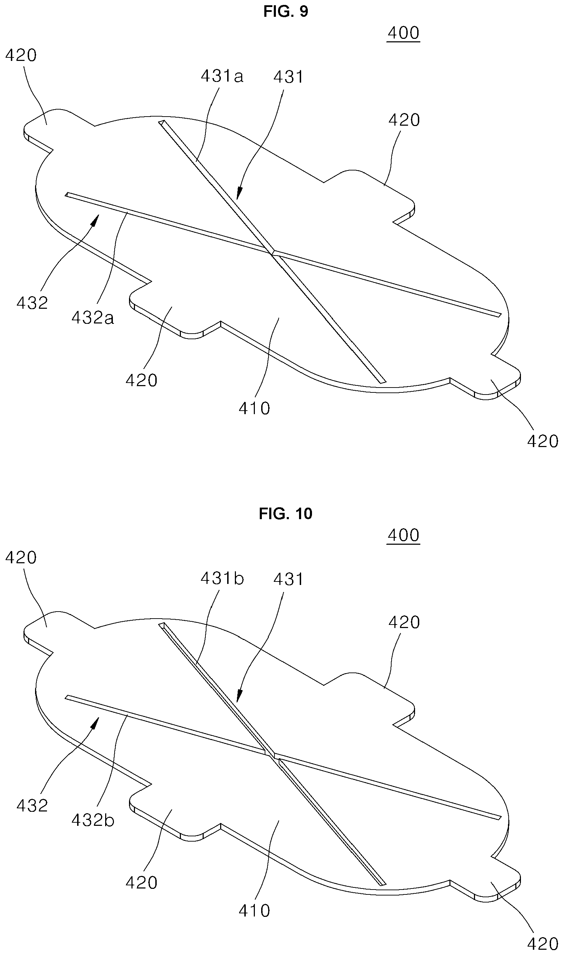

FIGS. 9 to 11 are schematic perspective views illustrating an insulating sheet in the battery module according to the second embodiment of the present invention.

Referring to FIG. 9, a first deforming part 431 and a second deforming part 432 may include notches 431a and 432a, respectively. The notches 431a and 432a may be formed to be recessed in an outer upper surface of a cover part 410. The notches 431a and 432a may each have a length (e.g., a preset length) and be formed in a substantially linear shape.

As an example, the notches 431a and 432a may be deformed to be bent by a pressure of gas discharged through a first vent 110 and allow a protrusion 420 fixedly latched in a latch part 232 to be separated from the latch part 232. Accordingly, an insulating sheet 400 may be separated from a holder 200 by the pressure of the gas discharged through the first vent 110.

As another example, the notches 431a and 432a may be ruptured. The notches 431a and 432a deformed to be bent by the pressure of the gas discharged through the first vent 110 may be ruptured to break the insulating sheet 400.

Referring to FIG. 10, a first deforming part 431 and a second deforming part 432 may include slits 431b and 432b, respectively. The slits 431b and 432b may be formed to pass through a cover part 410 in a thickness of the cover part 410. The slits 431b and 432b may each have a length (e.g., a preset length) and be formed in a substantially linear shape.

As an example, the slits 431b and 432b may be deformed to be bent by a pressure of gas discharged through a first vent 110 and allow a protrusion 420 fixedly latched in a latch part 232 to be separated from the latch part 232. Accordingly, an insulating sheet 400 may be separated from a holder 200 by the pressure of the gas discharged through the first vent 110.

As another example, the slits 431b and 432b may be ruptured. The slits 431b and 432b deformed to be bent by the pressure of the gas discharged through the first vent 110 may be ruptured to break the insulating sheet 400.

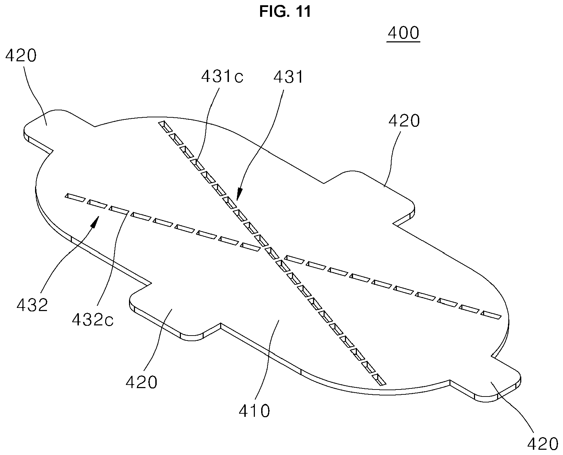

Referring to FIG. 11, a first deforming part 431 and a second deforming part 432 may include perforated lines 431c and 432c, respectively. The perforated lines 431c and 432c may be formed to pass through a cover part 410 in a thickness direction of the cover part 410. The perforated lines 431c and 432c may each have a length (e.g., a preset length) and be formed in a substantially linear shape.

As an example, the perforated lines 431c and 432c may be deformed to be bent by a pressure of gas discharged through a first vent 110 and allow a protrusion 420 fixedly latched in a latch part 232 to be separated from the latch part 232. Accordingly, an insulating sheet 400 may be separated from a holder 200 by the pressure of the gas discharged through the first vent 110.

As another example, the perforated lines 431c and 432c may be ruptured. The perforated lines 431c and 432c deformed to be bent by the pressure of the gas discharged through the first vent 110 to break the insulating sheet 400.

According to an embodiment of the present invention, when gas is discharged due to an abnormal phenomenon occurring in some battery cells among a plurality of battery cells, an insulating sheet, which covers the battery cell in which the abnormal phenomenon occurs, is separated from a holder by a pressure of the gas to suppress spread of the abnormal phenomenon to the other surrounding battery cells. Accordingly, the spread of fire and explosion can be delayed to protect the battery cells.

Although the present invention has been described with reference to embodiments and drawings illustrating aspects thereof, the present invention is not limited thereto. Various modifications and variations can be made by a person skilled in the art to which the present invention belongs within the scope of the present invention as defined by the appended claims and equivalents thereto.

## Claims

1. A battery module (1, 2) comprising:
a plurality of battery cells (100) of which first surfaces (A) are each provided with a first vent (110) and which are disposed in a first direction;
a holder (200) which covers the first surfaces (A) of the plurality of battery cells (100) and includes a second vent (211); and
an insulating sheet (300, 400) which is coupled to the holder (200), covers the second vent (211), and is configured to be deformed by a pressure of gas discharged through each of the first vents (110) and to open the second vent (211).

2. The battery module (1, 2) of claim 1, wherein the second vent (211) is provided as a plurality of second vents (211) disposed to be spaced apart from each other in the first direction.

3. The battery module (1, 2) of claim 1 or 2, wherein the second vent (211) is disposed at a location corresponding to the first vent (110).

4. The battery module (1, 2) of any one of the preceding claims, wherein the holder (200) includes:
a plate portion (210) in which the second vent (211) is formed; and
a coupling part (220, 230) which is provided along an edge of the second vent (211) and to which the insulating sheet (300, 400) is coupled.

5. The battery module (1, 2) of claim 4, wherein the coupling part (220, 230) includes:
a protruding portion (221, 231) protruding from the plate portion (210);
a seating part (222) which is formed to be recessed in the protruding portion (221, 231) and in which the insulating sheet (300, 400) is seated; and
a latch part (223, 232) which is formed to pass through the protruding portion (221, 231) and in which the insulating sheet (300, 400) is fixedly latched.

6. The battery module (1, 2) of claim 5, wherein:
the latch part (223, 232) is provided as a plurality of latch parts (223, 232) disposed to be spaced apart from each other along the protruding portion (221, 231); and
the seating part (222) is disposed between the plurality of latch parts (223, 232).

7. The battery module (1, 2) of claim 5 or 6, wherein the insulating sheet (300, 400) includes:
a cover part (310, 410) which covers the second vent (211);
a first protrusion (320) which protrudes from an edge of the cover part (310, 410) and is seated in the seating part (222);
a second protrusion (330) which protrudes from the edge of the cover part (310, 410) and passes through the latch part (223, 232); and
a deforming part (340, 430) formed between the cover part (310, 410) and the second protrusion (330) and deformed by the pressure of the gas discharged through the first vent (110).

8. The battery module (1, 2) of claim 7, wherein:
the first protrusion (320) is provided as a plurality of first protrusions (320) disposed to be spaced apart from each other along the edge of the cover part (310, 410); and
the second protrusion (330) is disposed between the plurality of first protrusions (320)

9. The battery module (1, 2) of claim 4, wherein the coupling part (220, 230) includes:
a protruding portion (221, 231) protruding from the plate portion (210); and
a latch part (223, 232) which is formed to pass through the protruding portion (221, 231) and provided as a plurality of latch parts (223, 232) disposed to be spaced apart from each other along the protruding portion (221, 231) and in which the insulating sheet (300, 400) is fixedly latched.

10. The battery module (1, 2) of claim 9, wherein the insulating sheet (300, 400) includes:
a cover part (310, 410) which covers the second vent (211);
a protrusion (420) which protrudes from an edge of the cover part (310, 410) and passes through the latch part (223, 232); and
a deforming part (340, 430) formed in the cover part (310, 410) and deformed by the pressure of the gas discharged through the first vent (110).

11. The battery module (1, 2) of claim 10, wherein the deforming part (340, 430) includes:
a first deforming part (431); and
a second deforming part (432) which intersects the first deforming part (431).

12. The battery module (1, 2) of claim 7, 8, 10 or 11, wherein the deforming part (340, 430) is deformed to be bent.

13. The battery module (1, 2) of any one of the preceding claims, wherein the insulating sheet (300, 400) is separated from the holder (200) by the pressure of the gas discharged through the first vent (110).

14. The battery module (1, 2) of any one of the preceding claims, further comprising a side plate (500) which is disposed in a second direction intersecting the first direction and faces a second surface (B) of each of the plurality of battery cells (100).

15. The battery module (1, 2) of claim 14, further comprising an end plate (600) which is disposed in the first direction and faces a third surface (C) of the battery cell (100).
